# EUROPÄISCHE PATENTANMELDUNG

(11) **EP 0 840 045 A1**
(43) Veröffentlichungstag der Anmeldung: **06.05.1998**
(21) Anmeldenummer: 96810727.6
(22) Anmeldetag: 01.11.1996
(51) Int. Cl.: F16K 17/04, F16K 17/06

(54) **Direktwirkendes Sicherheitsventil und Hubkolbenbrennkraftmaschine mit Sicherheitsventil**

(71) Anmelder: Wärtsilä NSD Schweiz AG, 8401 Winterthur (CH)
(72) Erfinder: Hofer, Robert, 8353 Elgg (CH)
(74) Vertreter: Heubeck, Bernhard

(57) **Zusammenfassung**

Das direktwirkende Sicherheitsventil enthält ein Ventilgehäuse (1), einen Ventilsitz (36), einen Ventilkörper (2), eine Ventilfeder (5), um eine vom Mediumdruck unabhängigen Sitzanpresskraft zu erzeugen, einen mit dem Mediumdruck beaufschlagbaren Hohlkörper (3), der mit dem Ventilkörper (2) verbunden ist, um eine vom Mediumdruck abhängige Sitzanpresskraft zu erzeugen und eine zweite Ventilfeder (7), um den Abblasdruck einzustellen.

Aufgrund der vom Mediumdruck erzeugten Sitzanpresskraft kann eine kleine Sitzfläche vorgesehen werden, so dass das Ventil bei genau definierten Mediumdruck betätigt wird.

## Beschreibung

Die Erfindung betrifft ein direktwirkendes Sicherheitsventil gemäss dem Oberbegriff des Anspruches 1 und eine Hubkolbenbrennkraftmaschine mit Sicherheitsventil.

Derartige Sicherheitsventile sind bekannt und umfassen ein Ventilgehäuse mit einer Einlass- und Auslassöffnung, einen Ventilsitz, der im Bereich der Einlassöffnung ausgebildet ist, einen Ventilkörper, der mit dem Ventilsitz zusammenwirkt und eine Ventilfeder, welche den Ventilkörper gegen den Ventilsitz vorspannt.

Bei hohem Mediumdruck wird daher eine grössere Sitzfläche vorgesehen, um im drucklosem Zustand eine Beschädigung der Sitzfläche infolge der Federvorspannung auszuschliessen.

Bekanntlich ist der Oeffnungs- und Schliessfehler eines direktwirkendes Sicherheitsventils vom Verhältnis Sitzfläche zu Druckbeaufschlagungsfläche abhängig, d.h. bei grösserer Sitzfläche treten grössere Fehler auf. Dies ist ein Nachteil. Ein weiterer Nachteil besteht darin, dass die bekannten Sicherheitsventile nach mehrmaligem Abblasen im Regelfall ungenau funktionieren und zwar aufgrund der hohen Aufprallgeschwindigkeit beim Schliessen des Ventils.

Der Erfindung liegt die Aufgabe zugrunde ein direktwirkendes Sicherheitsventil zu schaffen, bei welchem die Nachteile behoben sind und das bei genau definiertem Mediumdruck öffnet und schliesst.

Diese Aufgabe wird erfindungsgemäss mit den kennzeichnenden Merkmalen des Anspruches 1 gelöst.

Aufgrund der druckabhängigen Sitzanpresskraft kann eine kleine Sitzfläche vorgesehen werden, wobei die Differenzkraft F₅ in einem Bereich gehalten wird, derart, dass einerseits eine zu hohe Sitzpressung in jedem Fall vermieden wird und andererseits dauernd eine ausreichende Dichtheit gewährleistet ist. Da die Beaufschlagungsfläche gross gewählt wird, ergibt sich ein kleiner Hub, z.B. 0,1 mm. Dadurch wird die Aufprallgeschwindigkeit des Ventilkörpers beim Schliessvorgang klein. Dies hat die Vorteile, dass das Ventil schnell reagiert und dass eine Sitzüberlastung durch den Ventilteller vermieden wird, so dass das Ventil eine lange Lebensdauer aufweist.

Weil der maximale Ventilhub ca 0,1 mm beträgt, können im Medium enthaltene Partikel grösser 0,1 mm nicht durch das geöffnete Ventil gelangen. Kleinere Partikel, die unter den Ventilsitz gelangen, werden entweder durch die Oeffnung ausgeschwemmt oder beim Schliessen des Ventils zerdrückt, weil eine hohe Schliesskraft vorhanden ist und die Ventilsitzpartien mit Vorteil gehärtet sind. Aufgrund des kleinen Ventilhubes ist das Ventil schmutzempfindlich.

Es ist von Vorteil, wenn die Wandungen des Rohres und des Mittelteiles im wesentlichen gleich lang sind, wenn der Raum zwischen dem Rohr und dem Mittelteil ein ringförmiger Spalt ist und wenn ein Medium zur Wärmeübertragung in dem Spalt angeordnet ist, sodass die Temperatur des Mittelteiles und des Rohres sowie deren Längenausdehnung gleich sind, wird eine überhöhte Sitzpressung vermieden. Hierzu kann mindestens der Mittelteil an der Aussenseite eine Isolierschicht aufweisen. Der Ventilkörper wird mittels einer Membran im Ventilgehäuse exakt konzentrisch gehalten und dadurch eine mit Medium beaufschlagbare Kammer gebildet werden.

Da die mit dem Medium beaufschlagbare Kammer gegenüber dem restlichen Ventilgehäuse hermetisch abgeschlossen ist, d.h. keine Spalten mit Medium gefüllt werden wird in vorteilhafter Weise das Ventil nicht durch eingetrocknetes Medium blockiert werden.

Aufgrund der druckabhängigen Sitzanpresskraft eignet sich das Ventil insbesondere für hohe Mediumdrücke. Das Sicherheitsventil eignet sich insbesondere aber nicht ausschliesslich für Hubkolbenbrennkraftmaschinen.

Nachfolgend wird die Erfindung anhand der beiliegenden Zeichnungen erläutert.

Es zeigen:
- Fig. 1: Einen Längsschnitt einer Ausführungsform eines erfindungsgemässen direktwirkenden Sicherheitsventils;
- Fig. 2: ein Diagramm des Kraftverlaufes in Abhängigkeit von Mediumdruck;
- Fig. 3: ein Diagramm des Kraftverlaufes am Ventilsitz in Abhängigkeit des Mediumdrucks und
- Fig. 4 bis 5: Ausführungsformen des Hohlkörpers.

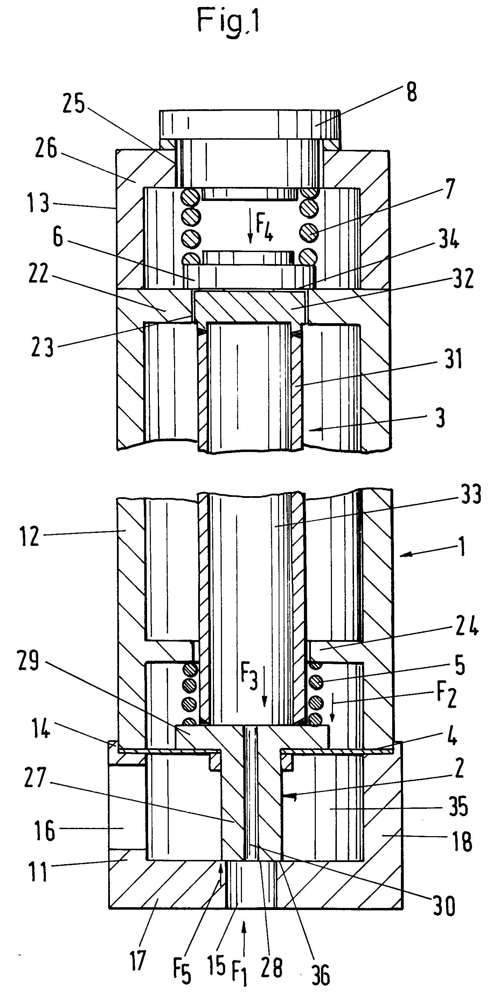

Wie die Figur 1 zeigt, besteht das Sicherheitsventil im wesentlichen aus einem Ventilgehäuse 1, einem Ventilkörper 2, einem Hohlkörper 3, einer Membrane 4, einer Ventilfeder 5, einem Auflageorgan 6, einer zweiten Ventilfeder 7 und einem Stellorgan 8. Das Ventilgehäuse 1 ist zylinderförmig ausgebildet und enthält einen Anschlussteil 11, einen Mittelteil 12 und einen Abschlussteil 13. Der Anschlussteil 11 ist becherförmig ausgebildet und am offenen Ende ist eine Schulter 14 ausgebildet. Der Anschlussteil 11 weist eine Einlassöffnung 15 und eine Auslassöffnung 16 für das Medium auf, wobei die Einlassöffnung im Zentrum des Bodens 17 und die Auslassöffnung in der Wandung 18 ausgebildet ist. Der Mittelteil 12 ist an einer Stirnseite offen und an der anderen Stirnseite teilweise durch eine Wandung 22 mit einer zentrischen Bohrung 23 abgeschlossen. Ferner weist der Mittelteil einen nach innengerichteten, ringförmigen Abschnitt 24 auf. Der Abschlussteil 13 ist becherförmig ausgebildet und hat eine Gewindebohrung 25 im Boden 26. Der Ventilkörper 2 weist einen zylindrischen ersten Abschnitt 27, dessen Stirnfläche einen Ventilteller 28 bildet und einen zweiten Abschnitt mit einem Flansch 29 auf, dessen Stirnfläche den Hohlkörper 3 abschliesst. Ferner hat der Ventilkörper 2 eine axiale Durchbohrung 30. Der Hohlkörper 3 besteht aus einem Rohr 31, dessen Wandstärke wesentlich dünner ist als die Wandstärke des Mittelteiles 12 und einem Abschlussteil 32, welcher das Rohr 31 an einem Ende abschliesst. Das andere Ende des Rohres 31 ist mit dem Ventilkörper 2 verbunden, sodass eine Absperreinheit mit einer Kammer 33 gebildet wird, die mit Medium beaufschlagbar ist.

Diese Absperreinheit ist im Ventilgehäuse 1 so angeordnet, dass der Ventilkörper 2 mit der Stirnfläche 28 die Einlassöffnung 15 schliesst und der Hohlkörper 3 in die Bohrung 23 ragt. Zwischen dem Anschlussteil 11 und dem Mittelteil 12 ist die Membrane 4 angeordnet, welche die Absperreinheit mit dem Ventilgehäuse 1 verbindet und eine mit Medium beaufschlagbare Kammer 35 bildet. Die Ventilfeder 5 ist zwischen dem ringförmigen Abschnitt 24 und dem Flansch 29 angeordnet und presst den Ventilkörper 2 gegen einen Ventilsitz 36, der im Bereich der Einlassöffnung 15 an der Innenseite des Anschlussteiles 11 ausgebildet ist. Im Abschlussteil 13 des Ventilgehäuses 1 sind das Auflageorgan 6, die zweite Ventilfeder 7 und das Stellorgan 8 angeordnet, wobei das Auflageorgan 6 an der Wandung 22 des Gehäusemittelteils 12 anliegt. Die Absperreinheit ist in der Längserstreckung so bemessen, dass zwischen dem Auflageorgan 6 und dem Hohlkörper 3 ein Abstand vorhanden ist.

Nachfolgend wird die Funktionsweise des direktwirkenden Sicherheitsventils mit Bezug auf die Figuren 1 bis 3 beschrieben.

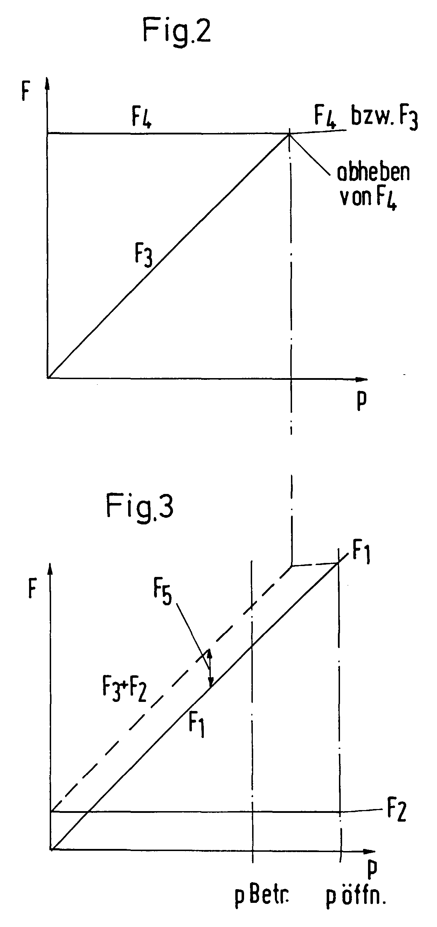

Die Ventilfeder 5 erzeugt eine Schliesskraft F₂, die vom Mediumdruck unabhängig ist und die zweite Feder 7 erzeugt eine Schliesskraft F₄, welche zusammen mit der Schliesskraft F₂ dem Sollansprechdruck entspricht. Während des Betriebes wirkt eine Kraft F₁ auf den Ventilteller 28, welche dem Produkt aus Mediumdruck und Grösse der Fläche 28 entspricht. Da das Medium auch in die Kammer 33 strömt, wird mit steigenden Innendruck F₃ das dünnwandige Rohr 31 im Sinne einer Verlängerung verformt. Diese Verlängerung wird nachdem der Spalt 34 aufgehoben ist, durch das relative dickwandige Ventilgehäuse 1 eingeschränkt. Mit zunehmender Einschränkung der Verformung des Rohres steigt die Kraft F₃ in axialer Richtung an und somit wird eine vom Mediumdruck abhängige Sitzanpresskraft F₂ + F₃ erzeugt (Figur 2). Dieser Sitzanpresskraft F₂ + F₃ wirkt eine Kraft F₁ aus dem Mediumdruck multipliziert mit der Fläche des Ventiltellers 28 entgegen. Durch entsprechende Auswahl der Rohrwanddicke wird der Verlauf der Kraft F₃ so festgelegt, dass dieser im wesentlichen parallel zum Verlauf der Kraft F₁ verläuft (Figur 3). Dadurch bleibt die Sitzpressung F₅, welche die Differenz der Kraftsumme F₂ und F₃ minus der Kraft F₁ entspricht, über den Betriebsdruck des Ventils hinaus im wesentlichen konstant, so dass über den ganzen Bereich des Mediumdruckes das Ventil einwandfrei dicht bleibt. Damit wird in vorteilhafter Weise erreicht, dass bei im System oberhalb des Nenndruckes auftretenden Druckschwingungen die Dichtheit des Ventils aufrechterhalten bleibt. Dadurch wird verhindert, dass bei zu geringer Sitzpressung das Ventil mit der Zeit undicht wird und zwar aufgrund einer Erosion am Ventilsitz durch ständig austretendes Medium. Erreicht der Mediumdruck den Sollanspruchdruck, so entspricht die Kraft F₃ im dünnwandigen Rohr 31 der von der Feder 7 erzeugten Kraft F₄, wobei der Hohlkörper 3 mit dem Abschlussorgan 32 das Auflageorgan 6 abhebt. Steigt der Mediumdruck weiter an, wird die Kraft F₁ grösser als die Kraft F₄ der zweiten Feder 7. Dadurch wird die zweite Feder rasch zusammengedrückt, weil die Steifigkeit der Feder 7 viel kleiner ist als die Steifigkeit des Rohres 31 und das Auflageorgan 6 wird von der als Anschlag dienenden Wandung 22 des Mittelteiles 12 des Ventilgehäuses 1 abgehoben und das Ventil beginnt abzublasen. In diesem Fall verhält sich das vorher axial steife dickwandige Gehäuse weicher als das dünnwandige Rohr 31.

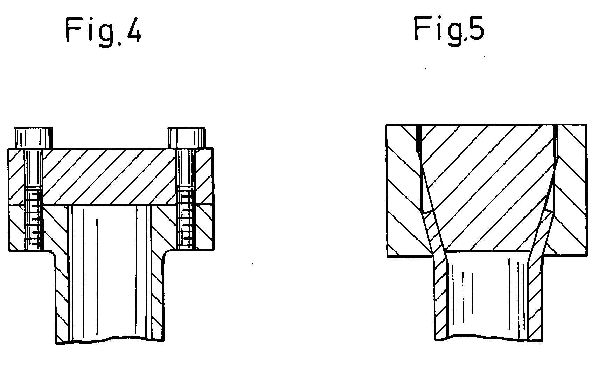

Die Figuren 4 und 5 zeigen Ausführungsformen für den Abschluss des Hohlkörpers.

Das direktwirkende Sicherheitsventil enthält ein Ventilgehäuse 1, einen Ventilsitz 36, einen Ventilkörper, eine Ventilfeder 5, um eine vom Mediumdruck unabhängigen Sitzanpresskraft zu erzeugen, einen mit dem Mediumdruck beaufschlagbaren Hohlkörper 3, der mit dem Ventilkörper 2 verbunden ist, um eine vom Mediumdruck abhängige Sitzanpresskraft zu erzeugen und eine zweite Ventilfeder 7, um den Abblasdruck einzustellen.

Aufgrund der vom Mediumdruck erzeugten Sitzanpresskraft kann eine kleine Sitzfläche vorgesehen werden, so dass das Ventil bei genau definierten Mediumdruck betätigt wird.

## Patentansprüche

1. Direktwirkendes Sicherheitsventil, das ein Gehäuse (2) mit einer Einlassöffnung (15) und einer Auslassöffnung (16) für ein Druckmedium, einen Ventilsitz (36), einen Ventilkörper (2) und eine Ventilfeder (5) zur Erzeugung einer vom Mediumdruck unabhängigen Sitzanpresskraft enthält, gekennzeichnet durch eine Einrichtung (3, 6, 7, 8), die mit dem Ventilkörper (2) in Wirkverbindung und mit dem Mediumdruck beaufschlagbar ist, um eine vom Mediumdruck abhängige Sitzanpresskraft zu erzeugen und den Mediumdruck zu begrenzen.

2. Ventil nach Anspruch 1, dadurch gekennzeichnet, dass die Einrichtung innerhalb des Ventilgehäuses (1) angeordnet ist.

3. Ventil nach einem der Ansprüche 1 oder 2, dadurch gekennzeichnet, dass das Ventilgehäuse (1) einen starren Mittelteil (12) aufweist.

4. Ventil nach einem der Ansprüche 1 bis 3, dadurch gekennzeichnet, dass die Einrichtung einen mit Medium beaufschlagbaren Hohlkörper (3), der im Sinne einer Verlängerung elastisch verformbar ist und Mittel (6, 7, 8) aufweist, um den Mediumdruck zu begrenzen.

5. Ventil nach einem der Ansprüche 1 bis 4, dadurch gekennzeichnet, dass die Wandung (31) des Rohres (31) und die Wandung des Mittelteiles (12) im wesentlichen die gleiche Länge aufweisen.

6. Ventil nach einem der Ansprüche 1 bis 5, dadurch gekennzeichnet, dass der Hohlkörper (3) aus einem dünnwandigen Rohr (31), das elastisch verformbar ist und aus einem Abschlussteil (32) besteht, welches das Rohr (31) an einem Ende abschliesst.

7. Ventil nach Anspruch 5 oder 6, dadurch gekennzeichnet, dass das Rohr (31) am anderen Ende mit dem Ventilkörper (2) abgeschlossen ist, um eine mit Medium beaufschlagbare Kammer (33) zu bilden.

8. Ventil nach einem der Ansprüche 1 bis 7, dadurch gekennzeichnet, dass ein Medium zur Wärmeübertragung im Raum zwischen der Aussenseite des Hohlkörpers (3) und der Innenseite des Mittelteiles (12) angeordnet ist.

9. Ventil nach einem der Ansprüche 1 bis 8, dadurch gekennzeichnet, dass der Ventilkörper (2) einen zylindrischen Abschnitt (27) mit einer Stirnfläche (28), die dazu bestimmt ist mit einer Sitzfläche (36) in Anlage zukommen und eine axiale Durchbohrung (30) aufweist.

10. Ventil nach einem der Ansprüche 1 bis 9, gekennzeichnet durch eine Membran (4), welche das Gehäuse (1) mit dem Ventilkörper (2) verbindet und eine mit Medium beaufschlagbare Kammer (35) im Ventilgehäuse (1) ausbildet.

11. Anordnung zum Steuern des Mediumdruckes mit einem Sicherheitsventil nach einem der Ansprüche 1 bis 10, dadurch gekennzeichnet, dass die Anordnung eine Einspritzanlage oder dgl. ist.

12. Hubkolbenbrennkraftmaschine mit einem Sicherheitsventil nach einem der Ansprüche 1 bis 10.
